# EUROPÄISCHE PATENTANMELDUNG

(11) **EP 4 112 985 A1**
(43) Veröffentlichungstag der Anmeldung: **04.01.2023**
(21) Anmeldenummer: 22180968.4
(22) Anmeldetag: 24.06.2022
(51) Int. Cl.: F16K 31/62, H01H 13/16, E03C 1/05, E03D 5/10, E03D 5/08

(54) **BETÄTIGUNGSVORRICHTUNG FÜR EINE WASSERAUSGABEVORRICHTUNG, WASSERAUSLAUFARMATUR UND VERFAHREN ZUM NACHRÜSTEN EINER BETÄTIGUNGSVORRICHTUNG AN EINE WASSERAUSLAUFARMATUR**

(30) Priorität: 28.06.2021 DE 102021116645
(71) Anmelder: KWC Group AG, 5726 Unterkulm (CH)
(72) Erfinder: Fritschi, Markus, 5745 Safenwil (CH); Harsch, David, 4665 Oftringen (CH)
(74) Vertreter: Witte, Weller & Partner Patentanwälte mbB

(57) **Zusammenfassung**

Es wird eine Betätigungsvorrichtung (2) für eine Wasserausgabevorrichtung vorgeschlagen, insbesondere eine Wasserauslaufarmatur, umfassend ein Bedienelement (10) und ein Steuermittel (15), wobei das Bedienelement (10) beweglich gelagert ist und das Steuermittel (15) dazu ausgestaltet ist, bei Betätigung des Bedienelements (10) ein Steuersignal (18) an eine Ventilvorrichtung (9) der Wasserausgabevorrichtung (1) auszugeben. Es ist wesentlich, dass an dem Bedienelement (10) ein Beschleunigungssensor (14) angeordnet ist, welcher dazu ausgestaltet ist, eine Beschleunigung des Bedienelements (10) entlang einer und/oder um mindestens eine Bewegungsachse zu erfassen und ein elektrisches Beschleunigungssignal (17) an das Steuermittel (15) auszugeben, in Abhängigkeit dessen das Steuermittel (15) das Steuersignal (18) erzeugt.

## Beschreibung

Die Erfindung betrifft eine Betätigungsvorrichtung für eine Wasserausgabevorrichtung, insbesondere für eine Wasserauslaufarmatur. Ferner betrifft die Erfindung eine Wasserauslaufarmatur sowie ein Verfahren zum Nachrüsten einer Betätigungsvorrichtung an eine Wasserauslaufarmatur.

In verschiedenen Einrichtungen kann ein Erfordernis danach bestehen, die Ausgabe von Wasser durch eine Wasserausgabevorrichtung unabhängig von einem handbetätigten Ventil zu ermöglichen. In Küchen ist dies beispielsweise der Fall, wenn Lebensmittel abgespült werden müssen und der Bediener der Wasserausgabevorrichtung, die als Wasserauslaufarmatur ausgestaltet ist, keine freie Hand zur Verfügung hat. In öffentlichen sanitären Einrichtungen kann die Wasserausgabevorrichtung auch als Spülung eines Urinals ausgestaltet sein, welche diese aus hygienischen Gründen nicht von Hand betätigt werden soll.

Bekannte Betätigungsvorrichtungen können bei Wasserausgabevorrichtungen wie z.B. Wasserauslaufarmaturen oder Urinalspülungen zusätzlich oder alternativ zu einem handbetätigten Ventil ausgebildet sein, mittels welchem die Wasserausgabevorrichtung zur Wasserausgabe steuerbar ist. Die Betätigungsvorrichtung umfasst dabei ein Bedienelement und ein Steuermittel.

Das Bedienelement ist typischerweise als Pedal oder knopfartiger Schalter ausgestaltet und ist dabei beweglich in einem Bereich unterhalb der Wasserausgabevorrichtung angeordnet. Das Steuermittel dient dazu, um bei Betätigung des Bedienelements ein Steuersignal an eine Ventilvorrichtung der Wasserausgabevorrichtung auszugeben. Dadurch wird die besagte Ventilvorrichtung zur Wasserausgabe in eine entsperrte Stellung gebracht und ein Wasserweg freigegeben.

In einer einfachen Ausführungsform ist das Steuermittel als ein mechanisches Kraftübertragungselement, z.B. mit einem Kabelzug oder einer Stange, ausgestaltet und einerseits mit dem Bedienelement und andererseits mit der zu steuernden Ventilvorrichtung der Wasserausgabevorrichtung verbunden. Eine Bewegung des Bedienelements führt zu einem Zug oder einem Druck, welcher über das Steuermittel als Steuersignal auf die Ventilvorrichtung übertragen und ein Wasserweg innerhalb der Ventilvorrichtung freigegeben wird. Ein Nachteil derartiger Betätigungsvorrichtungen besteht darin, dass sie aufgrund zahlreicher beweglicher und mechanisch miteinander verbundener Komponenten einen großen Bauraum erfordern, technisch komplex sind und häufig gewartet werden müssen.

Alternativ sind auch Betätigungsvorrichtungen bekannt, welche berührungslos bedienbar sind. Hierfür kommen üblicherweise Lichtschranken oder Reflex-Lichttaster zum Einsatz, die die Anwesenheit eines Bedieners im Bereich der Wasserausgabevorrichtung detektieren und ein elektrisches Signal an die Ventilvorrichtung ausgeben, um eine Wasserausgabe zu bewirken. Ein Nachteil derartiger berührungsloser Betätigungsvorrichtungen besteht darin, dass diese unterschiedliche und herstellerabhängige Detektionsbereiche haben. Somit ist es für den Bediener häufig nicht ohne mehrfach wiederholte Bedienversuche möglich, die Wasserausgabe zu steuern. Daher sind derartige Betätigungsvorrichtungen sehr unzuverlässig.

Der Erfindung liegt deshalb die Aufgabe zugrunde, eine Betätigungsvorrichtung für eine Wasserausgabevorrichtung bereitzustellen, welche einen einfachen und kompakten Aufbau aufweist und gleichzeitig zuverlässig im Betrieb ist.

Die Aufgabe wird gelöst durch eine Betätigungsvorrichtung mit den Merkmalen gemäß Anspruch 1, eine Wasserauslaufarmatur mit den Merkmalen gemäß Anspruch 6 sowie ein Verfahren mit den Merkmalen gemäß Anspruch 10. Vorteilhafte Weiterbildungen finden sich in den abhängigen Unteransprüchen.

Die erfindungsgemäße Betätigungsvorrichtung für eine Wasserausgabevorrichtung, insbesondere für eine Wasserauslaufarmatur, umfasst ein Bedienelement und ein Steuermittel, wobei das Bedienelement beweglich gelagert ist und das Steuermittel dazu ausgestaltet ist, bei Betätigung des Bedienelements ein Steuersignal an eine Ventilvorrichtung der Wasserausgabevorrichtung auszugeben.

Wesentlich ist, dass an dem Bedienelement ein Beschleunigungssensor angeordnet ist, welcher dazu ausgestaltet ist, eine Beschleunigung des Bedienelements entlang einer und/oder um mindestens eine Bewegungsachse zu erfassen und ein Beschleunigungssignal an das Steuermittel auszugeben, in dessen Abhängigkeit das Steuermittel das Steuersignal erzeugt.

Die der Erfindung zugrundeliegende Erkenntnis ist, dass es mittels Beschleunigungssensoren, welche in Großserie hergestellt und üblicherweise in Mobiltelefonen oder anderen Elektronikgütern verwendet werden, möglich ist, die Nachteile bekannter Betätigungsvorrichtungen für Wasserausgabevorrichtungen zu beheben.

Der Beschleunigungssensor ist derart an dem Bedienelement angeordnet, dass eine Geschwindigkeitsänderung des Bedienelements entlang und/oder um die Bewegungsachse des Bedienelements festgestellt werden kann. Eine solche Geschwindigkeitsänderung liegt insbesondere dann vor, wenn das Bedienelement sich in einer Ruhelage befindet und durch einen Impuls / Stoß auf eine beliebige Bewegungsgeschwindigkeit um und/oder entlang der Bewegungsachse beschleunigt wird.

Grundsätzlich kann das Bedienelement dabei an einer beliebigen Position relativ zu der Wasserausgabevorrichtung angeordnet sein. Im Fall von Wasserauslaufarmaturen in Küchen kann das Bedienelement in etwa auf gleicher Höhe mit der Wasserauslaufarmatur, insbesondere im Bereich eines Spülenrandes oder einer Arbeitsplatte angeordnet sein, sodass dieses z.B. mittels eines Hüftstoßes betätigt werden kann. Es liegt auch im Rahmen der Erfindung, dass das Bedienelement in etwa auf halber Höhe zwischen dem Boden und der Wasserausgabevorrichtung angeordnet und z.B. mittels Kniestoß betätigt werden kann. Es liegt auch im Rahmen der Erfindung, dass das Bedienelement bodennah angeordnet ist, um z.B. mittels Fußstoß oder Auftritt betätigt zu werden. Durch eine derartige Betätigung, ist es dem Bediener möglich, haptisch auf einfache Weise zu bemerken, ob er das Bedienelement tatsächlich zur Ausgabe von Wasser bedient hat. Gleichzeitig lässt sich durch eine geeignete Anordnung des Bedienelements eine Betätigung von Hand vollständig vermeiden.

Die Anordnung des Beschleunigungssensors an dem Bedienelement ist vorzugsweise von der Lagerung des Bedienelements abhängig. Sofern das Bedienelement linear geführt ist, ist der Beschleunigungssensor zumindest teilweise mit einer linearen Messachse entlang der linearen Bewegungsachse des Bedienelements ausgerichtet. Sofern das Bedienelement um eine Drehachse rotierend gelagert ist, z.B. in Form eines kippenden Pedals, kann der Beschleunigungssensor zusätzlich oder alternativ eine Drehbeschleunigungsmessachse aufweisen, um eine Drehgeschwindigkeitsänderung des Bedienelements zu erfassen.

In einer einfachen Ausführungsform umfasst der Beschleunigungssensor einen handelsüblichen 3-Achs-Beschleunigungssensor, welcher eine Beschleunigung des Bedienelements entlang und/oder um drei Raumachsen erfassen kann. Durch Anordnung eines solchen 3-Achs-Beschleunigungssensors an dem Bedienelement, kann die zu messende Beschleunigung unabhängig von einer zuvor festgelegten Ausrichtung des Beschleunigungssensors gegenüber dem Bedienelement erfasst werden.

Das von dem Beschleunigungssensor ausgegebene Beschleunigungssignal ist vorzugsweise ein analoges elektrisches Signal, welches die Beschleunigung des Bedienelements repräsentiert und vorzugsweise proportional zu der gemessenen Beschleunigung ist. Selbstverständlich kann das Beschleunigungssignal jedoch auch ein digitales Signal sein, z.B. wenn in dem Beschleunigungssensor ein Analog-Digital-Umsetzer integriert ist.

Der Beschleunigungssensor und das Steuermittel sind signaltechnisch miteinander verbunden, z.B. über ein flexibles elektrisches Kabel oder eine Leiterplatte. Ferner kann der Beschleunigungssensor eine energietechnische Verbindung zu dem Steuermittel aufweisen, über die der Beschleunigungssensor mit elektrischer Energie versorgt wird. Alternativ kann der Beschleunigungssensor jedoch auch eine eigene elektrische Energieversorgung aufweisen und nur signaltechnisch mit dem Steuermittel verbunden sein. Es liegt im Rahmen der Erfindung, dass das Steuermittel und der Beschleunigungssensor räumlich zusammengefasst vorliegen und insbesondere als bauliche Einheit an dem Bedienelement angeordnet sind. Ebenso ist es möglich, dass das Steuermittel räumlich von dem Beschleunigungssensor getrennt angeordnet ist und diese über die signaltechnische und gegebenenfalls energietechnische Verbindung mittels eines oder mehrerer Kabel miteinander verbunden sind.

Das Steuermittel ist dazu ausgestaltet, das Beschleunigungssignal des Beschleunigungssensors aufzunehmen und in Abhängigkeit eines zuvor definierten Kriteriums, etwa einer zu überschreitenden Signalamplitude, das Steuersignal an die Ventilvorrichtung auszugeben. Hierzu können das Steuermittel und die Ventilvorrichtung über eine elektrische Signalleitung in Gestalt mindestens eines flexiblen Kabels miteinander verbunden sein. Ebenso ist auch eine drahtlose signaltechnische Verbindung zwischen dem Steuermittel und der Ventilvorrichtung möglich.

Es liegt ebenfalls im Rahmen der Erfindung, dass das Steuermittel einen Aktor umfasst, welcher in Abhängigkeit des elektrischen Messsignals in an sich bekannter Weise ein mechanisches Steuersignal an die Ventilvorrichtung ausgibt. Hierbei kann der Beschleunigungssensor am Bedienelement angeordnet sein, während das Steuermittel in kompakter Weise räumlich getrennt von dem Beschleunigungssensor und im Bereich der Ventilvorrichtung angeordnet und mechanisch mit dieser verbunden ist.

Die Ventilvorrichtung kann als ein monostabiles und/oder bistabiles Ventil ausgestaltet sein oder zumindest ein solches Ventil umfassen. Wenn die Ventilvorrichtung als ein monostabiles Ventil ausgestaltet ist, kann dieses mittels des Steuersignals betätigt werden und dadurch einen Wasserweg zur Ausgabe von Wasser aus der Wasserausgabevorrichtung freigeben. Nach Abfall des Steuersignals kann das monostabile Ventil mittels eines selbstständig betätigten Rückstellgliedes, beispielsweise mittels Federrückstellung, in seine sperrende Grundstellung zurück gelangen. Wenn die Ventilvorrichtung ein bistabiles Ventil umfasst, kann dieses in einfacher Weise mittels zweier, zeitlich versetzter Steuersignale betätigt werden. Das erste Steuersignal kann das Ventil dabei zunächst in eine geöffnete Stellung bringen, während das zweite Steuersignal das Ventil wieder in eine geschlossene Stellung bringt. Beide Steuersignale können über die signaltechnische Verbindung zwischen dem Steuermittel und der Ventilvorrichtung kommuniziert werden.

In einer bevorzugten Weiterbildung umfasst das Steuermittel einen Signalverstärker, eine Auswerteeinheit sowie eine Ausgangsstufe.

Der Signalverstärker dient dazu, das elektrische Beschleunigungssignal des Beschleunigungssensors aufzunehmen und die Amplitude des elektrischen Beschleunigungssignals in Abhängigkeit eines Verstärkungsfaktors zu verändern, insbesondere zu erhöhen. Es liegt im Rahmen der vorteilhaften Weiterbildung, dass der Signalverstärker in den Beschleunigungssensor intergiert oder räumlich getrennt von diesem ausgebildet und angeordnet ist. Es liegt ebenfalls im Rahmen der vorteilhaften Weiterbildung, dass der Verstärkungsfaktor bedarfsweise eingestellt und nach einer entsprechenden Einstellung bedarfsweise auch dem Wert "eins" entsprechen kann.

In einer einfachen Ausführungsform handelt es sich bei dem Signalverstärker um einen Operationsverstärker, in welchen das Beschleunigungssignal als elektrische Spannung eingegeben wird und ebenfalls als elektrische Spannung, jedoch mit veränderter Amplitude, ausgegeben wird. Eine derartige Veränderung der Amplitude des Beschleunigungssignals ist insbesondere vorteilhaft, wenn die Auswerteeinheit als Microcontroller ausgestaltet ist und das Beschleunigungssignal nicht ohne Veränderung der Amplitude, insbesondere seiner Verstärkung, durch den Microcontroller verarbeitet werden kann. Es liegt im Rahmen der vorteilhaften Weiterbildung, dass die Auswerteeinheit mit dem Signalverstärker und/oder mit dem Beschleunigungssensor zu einer elektrischen Baugruppe räumlich zusammengefasst sind oder jedoch räumlich voneinander getrennt vorliegen.

Bevorzugt ist die Auswerteeinheit als Microcontroller ausgestaltet. Zur Auswertung des Beschleunigungssignals weist die Auswerteinheit bevorzugt einen Speicher mit einer darin gespeicherten Auswerteroutine auf. Alternativ kann die Auswerteeinheit zumindest teilweise als Komparatorschaltung ausgestaltet sein. Unabhängig von der konkreten Ausführungsform, dient die Auswerteeinheit dazu, das eingegebene Beschleunigungssignal anhand mindestens eines Kriteriums dahingehend auszuwerten, ob eine Wasserausgabe erfolgen und/oder ob diese gegebenenfalls wieder unterbrochen werden soll.

Bevorzugt wird das gegebenenfalls verstärkte Beschleunigungssignal mittels der Auswerteeinheit dahingehend ausgewertet, ob dieses zu einem definierten Zeitpunkt oder in seinem zeitlichen Verlauf eine hinreichend hohe oder eine hinreichend niedrige Amplitude aufweist. Ferner kann das Beschleunigungssignal dahingehend auswertet werden, ob es in seinem zeitlichen Verlauf eine Steigung aufweist, und die damit verbundene zeitliche Änderungsrate des Beschleunigungssignals hinreichend hoch oder hinreichend niedrig ist. Es liegt ferner im Rahmen der vorteilhaften Weiterbildung, dass das Beschleunigungssignal dahingehend ausgewertet wird, ob es in zumindest zwei unterschiedlichen Bereichen seines zeitlichen Verlaufs jeweils eine vorgegebene Amplitude und/oder einen vorgegebenen zeitlichen Verlauf aufweist. Hierbei kann insbesondere auch ausgewertet werden, ob die ausgewerteten Signalcharakteristika aus zumindest zwei unterschiedlichen Zeitfenstern in einem vordefinierten Verhältnis zueinander stehen.

Der Beschleunigungssensor kann mittels der Auswerteeinheit, insbesondere, sofern diese als Microcontroller ausgebildet ist, derart parametriert sein, dass das ausgegebene Beschleunigungssignal eine individuell definierbare Form aufweist. Insbesondere kann die Auswertung dadurch vereinfacht werden, wenn das Beschleunigungssignal als Puls ausgegeben wird, welcher mittels einfacher Operationen auf dem Mikrocontroller detektiert und verarbeitet werden kann.

Bevorzugt wird das Steuersignal in Abhängigkeit der vorstehend beschriebenen Auswertung des Beschleunigungssignals ausgegeben. Hierbei ist es möglich, das Steuersignal zeitgesteuert über eine zuvor bestimmte Zeitdauer auszugeben, sodass die Wasserausgabe nach einmaliger Betätigung des Bedienelements über einen Zeitraum von vorzugsweise mehreren Sekunden erfolgt. Entsprechend kann die Wasserausgabe auch durch ein zweites Steuersignal nach einem zweiten Stoß gegen das Bedienelement, beendet werden. Nach Ablauf der besagten Zeitdauer fällt das Steuersignal ab, sodass an der Ausgangstufe eine Spannung von annähernd oder vorzugsweise exakt Null Volt anliegt.

Sofern die Auswerteeinheit als Mikrocontroller ausgestaltet ist, kann diese in Zusammenwirkung mit dem Beschleunigungssensor auf besonders effiziente Weise betrieben werden. Insbesondere ist es denkbar, dass das Beschleunigungssignal des Beschleunigungssensors als sog. Interrupt-Signal genutzt wird, in dessen Abhängigkeit ein Betriebszustand oder eine Auswerteroutine des Mikrocontrollers eingestellt oder ausgewählt wird.

Insbesondere kann der Mikrocontroller in einem energiesparenden Modus, dem sog. Sleep-Modus betrieben werden, solange die Betätigungsvorrichtung nicht bedient wird. Durch Betätigung der Betätigungsvorrichtung und der Eingabe des Beschleunigungssignals als Interrupt-Signal kann der Mikrocontroller aus dem Sleep-Modus in seinen gewöhnlichen Betriebszustand gebracht werden. In diesem gewöhnlichen Betriebszustand kann die Ausgabe von Wasser bevorzugt zeitgesteuert, z.B. über eine Dauer von mehreren Sekunden oder in Abhängigkeit einer anderen, oben bereits beschriebenen Auswerteroutine, erfolgen. Anschließend kann der Mikrocontroller wieder in seinen energiesparenden Sleep-Modus fallen.

Die vorstehend beschriebene Betriebsweise der Betätigungsvorrichtung geht mit einer hohen Energieeffizienz einher. Insbesondere kann ein vergleichsweise gering dimensionierter elektrischer Akkumulator, insbesondere ein Lithium-Polymer-Akkumulator oder ein Lithium-Ionen-Akkumulator, zum Betrieb der gesamten Betätigungsvorrichtung verwendet werden. Insbesondere wenn der Mikrocontroller dazu ausgebildet ist, das Steuersignal in Gestalt einer Steuerspannung für die Ventilvorrichtung auszugeben, muss keine dauerhafte Anbindung der Auswerteeinheit oder des Beschleunigungssensors an eine fest installierte Spannungsversorgung vorhanden sein.

Es liegt im Rahmen der vorteilhaften Weiterbildung, dass die Auswerteeinheit und der Beschleunigungssensor zu einer Baugruppe räumlich zusammengefasst sind oder räumlich getrennt voneinander vorliegen. Es liegt auch im Rahmen der vorteilhaften Weiterbildung, dass der Signalverstärker oder Teile von ihm in den Beschleunigungssensor und/oder in die Auswerteeinheit integriert sind. Die Ausgangsstufe kann als bauliche Einheit mit dem Beschleunigungssensor, dem Signalverstärker und der Auswerteeinheit ausgestaltet sein oder jedoch räumlich getrennt von diesen angeordnet sein.

In einer vorteilhaften Weiterbildung sind zumindest der Signalverstärker, die Auswerteeinheit und der Beschleunigungssensor auf einer gemeinsamen Leiterplatte angeordnet.

Die vorstehend beschriebene Anordnung ermöglicht eine automatisierte und damit kostengünstige Herstellung der elektrischen Baukomponenten der Betätigungsvorrichtung. Die elektrische Schaltung und der Beschleunigungssensor sind vorzugsweise als Surface-Mounted-Devices (SMD) ausgestaltet, sodass die Leiterplatte nur einseitig und lediglich an ihrer Oberfläche mit elektrischen Komponenten bestückt ist. Dies ermöglicht es, die nicht bestückte Rückseite der Leiterplatte zur planen Anlage an das Bedienelement zu verwenden. In einer anderen Ausführungsform der Leiterplatte kann diese als ein elektrisch isolierendes Substrat ausgestaltet sein und die elektrischen Komponenten sowie Leiterbahnen oberflächlich an dem Substrat angeordnet, insbesondere aufgelötet, sein.

Bevorzugt ist auch die Ausgangsstufe zusammen mit dem Beschleunigungssensor, dem Signalverstärker und der Auswerteeinheit auf der Leiterplatte angeordnet. Hierdurch lassen sich alle elektronischen Komponenten auf einer Leiterplatte anordnen und als kompakte Baueinheit ausbilden und gegebenenfalls austauschen.

In einer vorteilhaften Weiterbildung ist die Auswerteeinheit und die Ausgangsstufe über eine drahtlose Sender-Empfänger-Anordnung signaltechnisch miteinander verbunden.

Gemäß vorstehend beschriebener Weiterbildung ist die Ausgangsstufe bevorzugt nicht auf einer gemeinsamen Leiterplatte mit den übrigen elektronischen Komponenten angeordnet. Stattdessen ist die Ausgangsstufe, welche den Leistungsteil der elektronischen Komponenten zum Steuern der Ventilvorrichtung darstellt, bei dieser vorteilhaften Weiterbildung in räumlicher Nähe zu der Ventilvorrichtung angeordnet. Dies geht mit Vorteilen hinsichtlich der elektromagnetischen Verträglichkeit des Beschleunigungssensors einher.

Bei der drahtlosen Sender-Empfänger-Anordnung handelt es sich vorzugsweise um eine Vorrichtung zur Funkkommunikation, welche ein Sendemodul und ein Empfängermodul umfasst. Das Sendemodul ist hierbei signal- und energietechnisch mit der Auswerteeinheit, welche bevorzugt als Mikrocontroller ausgestaltet ist, verbunden. Das Empfängermodul ist signaltechnisch hingegen mit der Ausgangsstufe verbunden. Vorzugsweise dient das Steuersignal des Funkempfängers als Vorsteuersignal, mittels welchem ein zusätzliches Schaltelement zur Steuerung der Ventilvorrichtung betätigt wird. Hierbei kann die Ausgangsstufe ein elektrisches Relais oder ein vergleichbares elektrisches Bauteil umfassen, welches seinerseits mit der Ventilvorrichtung verbunden ist.

Es liegt auch im Rahmen der vorteilhaften Weiterbildung, dass die Sender-Empfänger-Anordnung zwei WLAN-/ oder WiFi-Module umfasst, von denen eines mit der Auswerteeinheit, insbesondere in Gestalt eines Mikrocontrollers, verbunden ist und das jeweils andere WLAN-/ oder WiFi-Modul mit einer anderen Auswerteeinheit, welches ebenfalls als Mikrocontroller ausgestaltet ist, verbunden ist. Die vorstehend genannten WLAN-/ oder WiFi-Module können in einem entsprechend vorhandenen WLAN- oder WiFi-Netzwerk betrieben werden und das Steuersignal über ein solches Netzwerk übertragen.

In einer vorteilhaften Weiterbildung weist das Bedienelement einen Grundkörper mit einer Sichtseite und einer Montageseite auf. Hierbei ist der Beschleunigungssensor auf der Montageseite des Grundkörpers angeordnet.

Der Grundkörper des Bedienelements kann als eine Tritt- oder Stoßplatte, etwa ein dünnwandiges Metallblech, Glas, Keramik, Stein oder Kunststoffelement ausgestaltet sein, welches mit der Montageseite an einer Befestigungsfläche z.B. an der vertikalen Front einer Küchentheke angeordnet werden kann oder in horizontaler Anordnung als Platte vor der Sockelleiste. Der Beschleunigungssensor ist dabei von außen abgedeckt zwischen dem Grundkörper und der Befestigungsfläche montiert. Es liegt auch im Rahmen der vorteilhaften Weiterbildung, dass der Grundkörper des Bedienelements aus einem durchsichtigen Material hergestellt ist, insbesondere Glas. In einer solchen Ausgestaltung ist der Beschleunigungssensor von außen sichtbar.

Die Anordnung des Grundkörpers hängt vorzugsweise von der Art seiner Bedienung ab. Sofern die Wasserausgabe mittels eines Fußstoßes gesteuert werden soll, ist es vorteilhaft, den Grundkörper bodennah anzuordnen. Sofern die Wasserausgabe mittels eines Kniestoßes gesteuert werden soll, ist es vorteilhaft, den Grundkörper in einer Höhe von etwa 50 cm anzuordnen. Es liegt im Rahmen der vorteilhaften Weiterbildung, dass der Grundkörper länglich ausgebildet ist und in eine Mehrzahl verschiedener Bereiche auf der Sichtseite unterteilt ist. Durch vertikale Anordnung des Grundkörpers kann ein Bediener einen der Bereiche zur Bedienung der Betätigungsvorrichtung aussuchen und diese entsprechend ihrer Erreichbarkeit wahlweise mittels Fußstoß, Kniestoß oder Hüftstoß betätigen.

Vorzugsweise ist der Grundkörper an der Montageseite mittels eines Lagermittels, welches als elastisches Koppelelement ausgestaltet sein kann, befestigt. Hierfür eignet sich besonders ein doppeltklebendes Schaumstoff- oder Gummielement.

Damit der zwischen dem Grundkörper und der Befestigungsfläche angeordnete Beschleunigungssensor nicht eingeklemmt und beschädigt wird, ist die Bewegung des Grundkörpers oder die Verformung des Lagermittels z.B. durch ein mechanisches Anschlagelement begrenzt. Das Lagermittel ist vorzugsweise derart steif ausgebildet, dass ein gewöhnlicher Stoß zwar eine Bewegung oder Verformung des Grundkörpers bewirkt. Allerdings wird das Lagerelement hierbei gegenüber den Gesamtabmessungen des Grundkörpers nur geringfügig verstellt oder verformt. Dabei verbleiben alle empfindlichen und auf der Montageseite angeordneten Komponenten in einem hinreichend großen Abstand gegenüber der Befestigungsfläche. Zusätzlich oder alternativ kann die elektrische Schaltung in einer Vertiefung an der Montageseite des Grundkörpers angeordnet sein. Zusätzlich oder alternativ kann die Befestigungsfläche auch eine Vertiefung oder einen Durchbruch aufweisen, in welchen der Beschleunigungssensor und/oder die elektrische Schaltung bei Betätigung des Bedienelements eintauchen kann.

Die erfindungsgemäße Wasserauslaufarmatur umfasst mindestens einen Wasserzulaufanschluss, einen Wasserauslauf, ein in einem Wasserweg zwischen Wasserzulaufanschluss und Wasserauslauf angeordnete Ventilvorrichtung sowie eine erfindungsgemäße Betätigungsvorrichtung oder eine vorteilhafte Weiterbildung hiervon.

Die vorstehend beschriebene Wasserauslaufarmatur erlaubt in bereits erläuterter Weise eine Wasserausgabe, die mittels der erfindungsgemäßen Betätigungsvorrichtung oder einer vorteilhaften Weiterbildung hiervon gesteuert werden kann. Der Wasserzulaufanschluss dient in an sich bekannter Weise dazu, den Wasserauslauf der Wasserauslaufarmatur mit einer Wasserversorgung zu verbinden. Die Ventilvorrichtung kann hierbei, in bereits beschriebener Weise als mono- oder bistabiles Ventil ausgestaltet sein.

Es liegt im Rahmen der Erfindung, dass die Ventilvorrichtung die einzige Komponente der erfindungsgemäßen Wasserauslaufarmatur ist, mittels derer der Wasserweg zwischen dem Wasserzulaufanschluss und dem Wasserauslauf freigegeben oder gesperrt werden kann. Hierfür ist die Ventilvorrichtung signaltechnisch mit dem Steuermittel der erfindungsgemäßen Betätigungsvorrichtung verbunden.

Es liegt ferner im Rahmen der Erfindung, dass die Ventilvorrichtung als ein Mischventil ausgestaltet ist. Es sind somit auch zwei Wasserwege denkbar, welche jeweils von einem Kaltwasseranschluss und einem Warmwasseranschluss zu der Ventilvorrichtung führen. In dieser Ausführungsform dient die Ventilvorrichtung dazu, einen Kaltwasserstrom und einen Warmwasserstrom miteinander zu vermengen. Vorzugsweise ist das Mischverhältnis hierbei in Abhängigkeit des Beschleunigungssignals einstellbar. Insbesondere ist denkbar, dass die Anzahl und/oder die Intensität eines oder mehrerer Stöße gegen das Bedienelement zur Bedienung der Betätigungsvorrichtung dient. So kann z.B. ein einzelner Stoß die Ausgabe von Kaltwasser bewirken. Zwei Stöße bewirken hingegen die Ausgabe von Warmwasser. Drei Stöße bewirken z.B. eine oben bereits beschriebene Vermengung von Kalt- und Warmwasser. Es sind auch andere Varianten denkbar, gemäß denen die Beschleunigungssignale miteinander kombiniert werden können.

In einer vorteilhaften Weiterbildung der Wasserauslaufarmatur ist der Wasserweg zwischen dem Wasserzulaufanschluss und dem Wasserauslauf als Hauptleitung, insbesondere als eine Kaltwasserleitung, ausgebildet, in welcher ein handbetätigtes Ventil angeordnet ist. Ferner ist eine Bypassleitung in hydraulischer Parallelschaltung zu der Hauptleitung und dem in der Hauptleitung befindlichen handbetätigten Ventil angeordnet. Ferner ist die Ventilvorrichtung, welche mittels der erfindungsgemäßen Betätigungsvorrichtung steuerbar ist, in der Bypassleitung angeordnet.

Die vorstehend beschriebene Weiterbildung der Wasserauslaufarmatur geht mit dem Vorteil einher, dass die Wasserausgabe wahlweise durch Betätigung des Mischventils oder durch Bedienung der erfindungsgemäßen Betätigungsvorrichtung erfolgen kann. Hierbei ist die Ventilvorrichtung in ihrer unbetätigten Grundstellung sperrend ausgestaltet, sodass eine Wasserausgabe auf herkömmliche Weise durch Betätigung des handbetätigten Ventils möglich ist. Durch Betätigung der erfindungsgemäßen Betätigungsvorrichtung mittels eines Fuß-, Knie- oder Hüftstoßes, ist es möglich, eine Wasserausgabe auch durch die Bypassleitung zu bewirken. Die Bypassleitung weist dabei zwei Anschlüsse auf, von denen ein Anschluss als Zulaufanschluss ausgebildet ist und zwischen dem Wasserzulaufanschluss und dem handbetätigten Ventil in die Hauptleitung mündet und der jeweils andere Anschluss als Ablaufanschluss ausgebildet ist und zwischen dem handbetätigten Ventil und dem Wasserauslauf in die Hauptleitung mündet.

Vorzugsweise handelt es sich bei der Hauptleitung um eine Kaltwasserleitung, sodass die Wasserausgabe durch Betätigung der erfindungsgemäßen Betätigungsvorrichtung zu einer Ausgabe von Kaltwasser führt. Es liegt jedoch auch im Rahmen der vorteilhaften Weiterbildung der Wasserauslaufarmatur, dass die Ventilvorrichtung ebenfalls als Mischventil ausgestaltet ist und zwei Bypassleitungen vorgesehen sind, welche jeweils in hydraulischer Parallelschaltung zu einer Kaltwasserleitung bzw. zu einer Warmwasserleitung und dem handbetätigten Mischventil angeschlossen sind.

In einer vorteilhaften Weiterbildung ist die Wasserauslaufarmatur als Brausearmatur mit einer als Wasserauslauf dienenden Handbrause ausgebildet, die mit dem handbetätigten Ventil über einen flexiblen Brauseschlauch verbunden ist, und die Bypassleitung in den Brauseschlauch einmündet.

Eine Ausgestaltung der Wasserauslaufarmatur als Brausearmatur ermöglicht es, in unaufwändiger Weise, die Betätigungsvorrichtung als nachrüstbaren Bausatz an einer bestehenden Wasserauslaufarmatur anzubinden. Gemäß dem erfindungsgemäßen Verfahren zum Nachrüsten einer Wasserauslaufarmatur mit einer erfindungsgemäßen Betätigungsvorrichtung oder einer ihrer vorteilhaften Weiterbildungen, weist die Wasserauslaufarmatur mindestens einen Wasserzulaufanschluss, eine als Wasserauslauf dienende und über einen flexiblen Brauseschlauch mit der Armatur verbundene Handbrause und ein in einem Wasserweg zwischen Wasserzulaufanschluss und Handbrause angeordnetes, handbetätigtes Ventil auf. Das Nachrüsten erfolgt, indem eine von einer mit dem Wasserzulaufanschluss verbundenen Wasserleitung abzweigende und unter Umgehung des handbetätigten Ventils in den Brauseschlauch mündende Bypassleitung installiert wird, die mit einer Ventilvorrichtung, insbesondere Magnetventil versehenen ist, und das Steuermittel der Betätigungsvorrichtung mit dem elektrisch betätigten Ventil verbunden wird.

Zum Nachrüsten kann ein Ende der Bypassleitung in einfacher Weise z.B. mittels eines T-Stückes zwischen dem handbetätigten Ventil und dem Brauseschlauch angeordnet werden. Dafür wird der Brauseschlauch zunächst von dem handbetätigten Ventil gelöst und das T-Stück zwischengeschaltet. Das andere Ende der Bypassleitung kann in einfacher Weise mit einem beliebigen Wasserzulaufanschluss angeschlossen werden.

In einer vorteilhaften Weiterbildung der Wasserauslaufarmatur ist das handbetätigte Ventil als Mischventil ausgebildet und die Wasserauslaufarmatur weist einen Warmwasser- und einen Kaltwasserzulaufanschluss auf. Die Bypassleitung zweigt dabei von einer mit dem Kaltwasserzulaufanschluss verbundenen Kaltwasserleitung ab.

Gemäß vorstehend beschriebener Weiterbildung ist kein gesonderter Wasserzulaufanschluss für die Bypassleitung erforderlich. Stattdessen sind nur die üblichen Kalt- und Warmwasseranschlüsse ausreichend, um die Wasserauslaufarmatur mit der Betätigungsvorrichtung ausstatten oder nachrüsten zu können. Hierbei kann die Bypassleitung zulaufseitig z.B. mittels eines T-Stückes mit dem Kaltwasserzulaufanschluss verbunden werden. Mit einem T-Stück wird auch der Kaltwasseranschluss des Mischventils mit dem Kaltwasserzulaufanschluss verbunden.

Weitere bevorzugte Merkmale und Ausführungsformen werden im Folgenden anhand von Ausführungsbeispielen und den Figuren erläutert. Es zeigen
- Figur 1: eine Wasserauslaufarmatur mit einer erfindungsgemäßen Betätigungsvorrichtung;
- Figur 2: ein Blockschaltbild der elektrischen Komponenten der Betätigungsvorrichtung, bei der die elektronischen Komponenten auf einer gemeinsamen Leiterplatte angeordnet sind;
- Figur 3: ein Blockschaltbild der elektrischen Komponenten mit einer drahtlosen Sender-Empfänger-Anordnung.

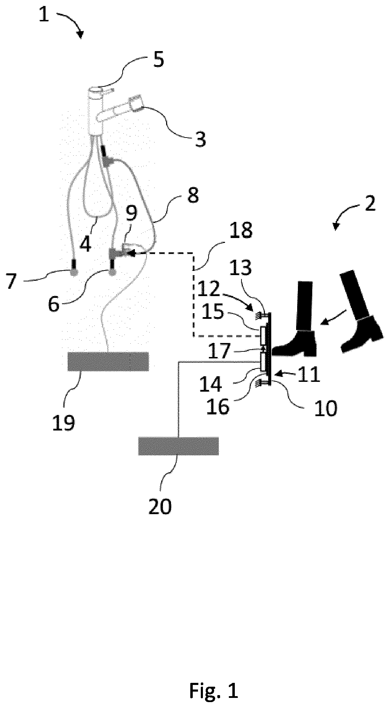

Figur 1 zeigt eine Wasserauslaufarmatur 1 mit einer Betätigungsvorrichtung 2. Die Wasserauslaufarmatur 1 weist einen als Handbrause ausgestalteten Wasserauslauf 3 auf, welcher über einen flexiblen Brauseschlauch 4 mit einem handbetätigten Mischventil 5 verbunden ist. Das Mischventil 5 weist zwei Zuläufe auf, die über jeweils eine Zulaufleitung mit einem Kaltwasserzulaufanschluss 6 bzw. einem Warmwasserzulaufanschluss 7 verbunden sind. Durch Betätigung des Mischventils 5 wird Wasser in Abhängigkeit einer Mischventilstellung und einer eingestellten Temperatur über den Brauseschlauch 4 aus dem Wasserauslauf 3 ausgegeben.

Die Betätigungsvorrichtung 2 dient dazu, die Ausgabe von Kaltwasser unabhängig von der Betätigung des Mischventils 5 zu ermöglichen. In dem gemäß Figur 1 gezeigten Ausführungsbeispiel wurde die Betätigungsvorrichtung 2 sowie eine Bypassleitung 8 an die bereits bestehende Wasserauslaufarmatur 1 nachgerüstet.

Im Rahmen der Nachrüstung der Betätigungsvorrichtung 2 wurde die Bypassleitung 8 zulaufseitig mittels eines T-Stücks zwischen den Kaltwasseranschluss 6 und die Kaltwasserzulaufleitung geschaltet. Das T-Stück dient dazu, einen durch den Kaltwasserzulaufanschluss 6 bereitgestellten Kaltwasserstrom einerseits in die Bypassleitung 8 und andererseits in die Kaltwasserzulaufleitung zum Mischventil 5 zu leiten. Ferner wurde im Rahmen der Nachrüstung die Bypassleitung 8 auslassseitig mittels eines T-Stückes mit dem Brauseschlauch 4 verbunden.

In der Bypassleitung 8 ist ein elektrisch betätigbares Magnetventil 9 angeordnet. In einer geöffneten Stellung des Magnetventils 9 wird Kaltwasser durch die Bypassleitung 8 in den Brauseschlauch 4 geleitet und somit auch bei geschlossener Stellung des Mischventils 5 aus dem Wasserauslauf 3 ausgegeben.

Ferner ist im Rahmen der Nachrüstung der Betätigungsvorrichtung 2 an der Wasserauslaufarmatur 1 ein Bedienelement 10 in Gestalt eines flachen Metallblechs unterhalb der Wasserauslaufarmatur 1 angeordnet worden. Im gezeigten Ausführungsbeispiel handelt es sich bei dem Befestigungsuntergrund um die Front einer Küchentheke. Grundsätzlich kann es sich hierbei jedoch um eine beliebige Oberfläche eines Bestandteils einer Küchenkombination handeln.

Das Bedienelement 10 weist einen Grundkörper mit einer Sichtseite 11 und einer Montageseite 12 auf, der als Tritt- oder Stoßplatte dient und per Fußstoß betätigt werden kann. Auf der Montageseite 12 sind hierzu mehrere Lagermittel von denen nur eines mit dem Bezugszeichen 13 versehen ist, jeweils in Gestalt eines elastisch verformbaren Koppelmittels angeordnet. Im gezeigten Beispiel ist es möglich, die Anzahl der Lagermittel 13 in Abhängigkeit des Grundkörpers festzulegen und auf diesem anzuordnen. Die Lagermittel 13 dienen dazu, das Bedienelement 10 gegenüber dem Befestigungsuntergrund beweglich zu lagern. Im einfachsten Fall ist das Lagermittel 13 als beidseitig mit einer selbstklebenden Beschichtung versehenes Schaumstoff-Tape ausgebildet.

Neben den Lagermitteln 13 ist ein Beschleunigungssensor 14 sowie ein Steuermittel 15 an der Montageseite 12 des Bedienelements 10 angeordnet. Das Steuermittel 15 ist als elektrische Schaltung mit einem Signalverstärker, einer Auswerteeinheit sowie einer Ausgangsstufe ausgestaltet. Der Beschleunigungssensor 14 und die Steuermittel 15 sind auf einer gemeinsamen Leiterplatte 16, welche als Printed-Circuit-Board ausgestaltet ist, angeordnet.

Durch einen Fußstoß gegen die Sichtseite 11 des Grundkörpers des Bedienelements 10 wird dieses aus einem Ruhezustand heraus beschleunigt. Die damit einhergehende Geschwindigkeitsänderung wird durch den Beschleunigungssensor 14 erfasst, woraufhin dieser ein elektrisches Messsignal 17 in Gestalt einer analogen, elektrischen Spannung an das Steuermittel 15 ausgibt.

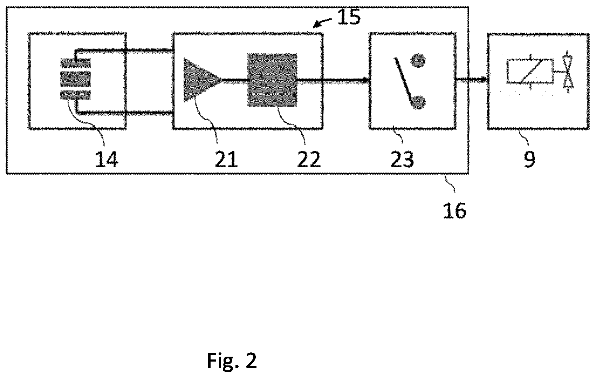

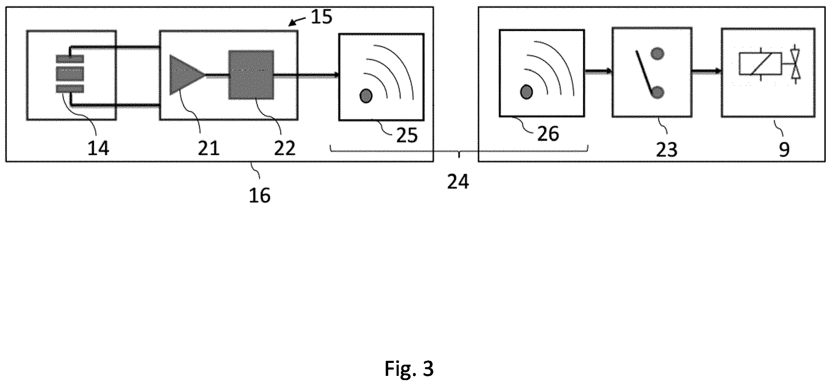

Das Steuermittel 15 gibt in Abhängigkeit des elektrischen Messsignals 17 ein Steuersignal 18 an das Magnetventil 9 aus, wodurch dieses einen Wasserweg durch die Bypassleitung 8 freigibt. Im gezeigten Ausführungsbeispiel wird das Steuersignal 18 über eine Kabelverbindung an das Magnetventil ausgegeben. Es ist alternativ jedoch auch möglich, eine funktechnische Sender-Empfänger-Anordnung anstelle der Kabelverbindung vorzugsehen, über welche das Steuersignal 18 ausgegeben wird. Die hierbei in Frage kommenden Anordnungen sind in Bezug zu den Figuren 2 und 3 beschrieben.

Im gemäß Figur 1 gezeigten Ausführungsbeispiel unterscheidet sich die Betriebsspannung des Magnetventils 9 von der Betriebsspannung der elektrischen Komponenten der Betätigungsvorrichtung 2. Aus diesem Grund ist das Magnetventil 9 und die elektrischen Komponenten der Betätigungsvorrichtung 2 mittels unterschiedlicher Netzteile 19 bzw. 20 mit einer örtlichen Spannungsversorgung verbunden. Alternativ sind die elektrischen Komponenten der Betätigungsvorrichtung 2 und/oder das Magnetventil 9 jeweils mit einem elektrischen Akkumulator (nicht gezeigt) verbindbar.

Figur 2 zeigt ein Blockschaltbild mit dem Beschleunigungssensor 14 und dem Steuermittel 15, welche auf der gemeinsamen Leiterplatte 16 angeordnet sind, sowie das Magnetventil 9.

Das Steuermittel 15 umfasst einen Signalverstärker 21, eine Auswerteeinheit 22 sowie eine Ausgangsstufe 23. Der Signalverstärker 21 dient dazu, die Signalamplitude des elektrischen Messsignals zu erhöhen und in die Auswerteeinheit 22 einzugeben. Die Auswerteeinheit 22 ist im vorliegenden Ausführungsbeispiel als Microcontroller ausgestaltet und ist mit dem Signalverstärker 21 und dem Beschleunigungssensor 14 zu einer baulichen Einheit zusammengefasst. Die Kommunikation erfolgt hierbei mittels I2C-Bus. Mittels einer gespeicherten Auswertungsroutine überprüft die Auswerteeinheit 22, ob die durch den Fußstoß erzeugte Beschleunigung des Bedienelements 10 eine Mindestbeschleunigung überschreitet. Hierbei wird die in die Auswerteeinheit 22 eingegebene verstärkte Messsignal 17 oder eine daraus abgeleitete Größe, etwa eine Bit-Repräsentation des eingegebenen Messignals 17 mit einem Referenzwert verglichen. Liegt das eingegebene Messsignal 17 oder die daraus abgeleitete Größe oberhalb des Referenzwertes wird mittels der Ausgangsstufe 23 das Steuersignal an das Magnetventil 9 ausgegeben. Daraufhin wird das Magnetventil für eine bedarfsweise einstellbare Zeitdauer geöffnet und Kaltwasser tritt aus dem Wasserauslauf. Es liegt im Rahmen des hier gezeigten Ausführungsbeispiels, dass der Beschleunigungssensor mittels des Microcontrollers in einer Weise parametriert ist, dass das Beschleunigungssignal als Interruptsignal an den Microcontroller ausgegeben wird.

Das Magnetventil kann über die Betätigungsvorrichtung durch einen erneuten Fußstoß geschlossen und die Wasserausgabe damit beendet werden. Alternativ kann das Steuermittel 15 eine Zeitsteuerung umfassen, sodass das Steuersignal 18 automatisch abfällt, wenn eine vordefinierte Zeit abgelaufen ist.

Figur 3 zeigt eine alternative Anordnung der in Figur 2 gezeigten elektronischen Komponenten, bei denen zwischen der Auswerteeinheit 22 und der Ausgangsstufe 23 eine funktechnische Sender-Empfänger-Anordnung 24 vorgesehen ist. Die Sender-Empfänger-Anordnung umfasst eine Sendeeinheit 25 und eine Empfängereinheit 26, mittels derer das Steuersignal 24 per Funk übertragen wird, um das Magnetventil 9 zu steuern.

## Patentansprüche

1. Betätigungsvorrichtung (2) für eine Wasserausgabevorrichtung, insbesondere eine Wasserauslaufarmatur, umfassend ein Bedienelement (10) und ein Steuermittel (15), wobei das Bedienelement (10) beweglich gelagert ist und das Steuermittel (15) dazu ausgestaltet ist, bei Betätigung des Bedienelements (10) ein Steuersignal (18) an eine Ventilvorrichtung (9) der Wasserausgabevorrichtung (1) auszugeben, **dadurch gekennzeichnet, dass** an dem Bedienelement (10) ein Beschleunigungssensor (14) angeordnet ist, welcher dazu ausgestaltet ist, eine Beschleunigung des Bedienelements (10) entlang einer und/oder um mindestens eine Bewegungsachse zu erfassen und ein elektrisches Beschleunigungssignal (17) an das Steuermittel (15) auszugeben, in Abhängigkeit dessen das Steuermittel (15) das Steuersignal (18) erzeugt.

2. Betätigungsvorrichtung nach Anspruch 1, wobei das Steuermittel (15) einen Signalverstärker (21), eine Auswerteeinheit (22) sowie eine Ausgangsstufe (23) umfasst.

3. Betätigungsvorrichtung nach Anspruch 2, wobei zumindest der Beschleunigungssensor (14), der Signalverstärker (21) und die Auswerteeinheit (22) auf einer gemeinsamen Leiterplatte (16) angeordnet sind.

4. Betätigungsvorrichtung nach Anspruch 2 oder 3, wobei die Auswerteeinheit und die Ausgangsstufe über eine drahtlose Sender-Empfänger-Anordnung (24) signaltechnisch miteinander verbunden sind.

5. Betätigungsvorrichtung nach einem der Ansprüche 1 bis 4, wobei das Bedienelement (10) einen Grundkörper mit einer Sichtseite (11) und einer Montageseite (12) aufweist und der Beschleunigungssensor (14) auf der Montageseite (12) des Grundkörpers angeordnet ist.

6. Wasserauslaufarmatur (1) mit mindestens einem Wasserzulaufanschluss, einem Wasserauslauf (3), einem in einem Wasserweg, zwischen Wasserzulaufanschluss (6, 7) und Wasserauslauf (3) angeordneten Ventilvorrichtung sowie einer Betätigungsvorrichtung nach einem der Ansprüche 1 bis 5.

7. Wasserauslaufarmatur (1) nach Anspruch 6, wobei der Wasserweg zwischen dem Wasserzulaufanschluss und dem Wasserauslauf eine Hauptleitung mit einem darin angeordneten handbetätigten Ventil aufweist, sowie eine in hydraulischer Parallelschaltung zu dem handbetätigten Ventil angeordnete Bypassleitung, in welcher die Ventilvorrichtung angeordnet ist.

8. Wasserauslaufarmatur nach Anspruch 7, wobei die Wasserauslaufarmatur (1) als Brausearmatur mit einer als Wasserauslauf (3) dienenden Handbrause ausgebildet ist, die mit dem handbetätigten Ventil (5) über einen flexiblen Brauseschlauch (4) verbunden ist, und die Bypassleitung (8) in den Brauseschlauch (4) einmündet.

9. Wasserauslaufarmatur nach einem der Ansprüche 6 bis 8, wobei das handbetätigte Ventil (5) als Mischventil ausgebildet ist und die Wasserauslaufarmatur (1) einen Kaltwasseranschluss (6) und einen Warmwasseranschluss (7) aufweist, und die Bypassleitung (8) von einer mit dem Kaltwasserzulaufanschluss (6) verbundenen Kaltwasserleitung abzweigt.

10. Verfahren zum Nachrüsten einer Wasserauslaufarmatur (1) mit einer Betätigungsvorrichtung (2) nach einem der Ansprüche 1 bis 5, wobei die Wasserauslaufarmatur (1) mindestens einen Wasserzulaufanschluss (6, 7), eine als Wasserauslauf (3) dienende und über einen flexiblen Brauseschlauch (4) mit der Armatur verbundene Handbrause und ein in einem Wasserweg zwischen Wasserzulaufanschluss (6, 7) und Handbrause angeordnetes, handbetätigtes Ventil (5) aufweist, indem eine von einer mit dem Wasserzulaufanschluss (6, 7) verbundenen Wasserleitung abzweigende und unter Umgehung des handbetätigten Ventils (5) in den Brauseschlauch (4) mündende Bypassleitung (8) installiert wird, die mit einem elektrisch betätigten Ventil (9), insbesondere Magnetventil versehenen ist, und das Steuermittel (15) der Betätigungsvorrichtung (2) mit dem elektrisch betätigten Ventil (9) verbunden wird.
